(19) Europäisches Patentamt
European Patent Office
Office européen des brevets

(11) EP 4 645 499 A1

(12) **EUROPEAN PATENT APPLICATION**

(43) Date of publication:
**05.11.2025 Bulletin 2025/45**

(21) Application number: **25173437.2**

(22) Date of filing: **30.04.2025**

(51) International Patent Classification (IPC):
***H01M 10/0525*** *(2010.01)* ***H01M 50/403*** *(2021.01)*
***H01M 50/42*** *(2021.01)* ***H01M 50/423*** *(2021.01)*
***H01M 50/434*** *(2021.01)* ***H01M 50/443*** *(2021.01)*
***H01M 50/446*** *(2021.01)* ***H01M 50/489*** *(2021.01)*
***C08F 222/00*** *(2006.01)* ***C08K 3/00*** *(2018.01)*
***C09D 7/00*** *(2018.01)* *H01M 4/131 (2010.01)*
*H01M 4/133 (2010.01)* *H01M 4/134 (2010.01)*

(52) Cooperative Patent Classification (CPC):
**H01M 50/489; C08F 222/00; C08K 3/00; C09D 7/62; C09D 7/68; H01M 10/0525; H01M 50/42; H01M 50/423; H01M 50/434; H01M 50/443; H01M 50/446;** C08K 3/013; C08K 9/06; H01M 4/131; H01M 4/133; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 KR 20240058158**

(71) Applicant: **SAMSUNG SDI CO., LTD.**
**Yongin-si, Gyeonggi-do 17084 (KR)**

(72) Inventors:
- **Ko, Chang Hong**
  **16678 Suwon-si, Gyeonggi-do, (KR)**
- **Kim, Soo Hee**
  **16678 Suwon-si, Gyeonggi-do (KR)**
- **Park, Sam Jin**
  **16678 Suwon-si, Gyeonggi-do (KR)**
- **Lee, Eon Mi**
  **16678 Suwon-si, Gyeonggi-do (KR)**
- **Lee, Min Jeong**
  **16678 Suwon-si, Gyeonggi-do (KR)**
- **Seo, Jin Weon**
  **16678 Suwon-si, Gyeonggi-do (KR)**
- **Han, Yoo Bin**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) Examples of the present disclosure include a separator for a rechargeable lithium battery, and a rechargeable lithium battery including the separator. The separator for a rechargeable lithium battery includes a porous substrate, and a coating layer on at least one surface of the porous substrate. The coating layer includes a cross-linked product of a binder, a cross-linking agent, and carboxyalkyl cellulose or a salt thereof, and a filler. The binder includes a (meth)acryl-based binder including a first structural unit derived from (meth)acrylamide and a second structural unit derived from (meth) acrylamido sulfonic acid or a salt thereof. The cross-linking agent includes one or more of an aziridine-based cross-linking agent and a carbodiimide-based cross-linking agent.

EP 4 645 499 A1

(52) Cooperative Patent Classification (CPC): (Cont.)
H01M 4/134; H01M 50/403; H01M 50/417

## Description

BACKGROUND

### 1. Field of the Invention

The present disclosure relates to a separator for a rechargeable lithium battery, and a rechargeable lithium battery including the separator.

### 2. Discussion of Related Art

With increasing presence of electronic devices, such as, e.g., mobile phones, notebook computers, electric vehicles, and the like, using batteries, the demand for secondary batteries having high energy density and high capacity is increasing. Therefore, improving the performance of rechargeable lithium batteries may be advantageous.

A rechargeable lithium battery typically includes a positive electrode and a negative electrode that include an active material capable of the intercalation and deintercalation of lithium ions, and produces electric energy by oxidation and reduction reactions when the lithium ions are intercalated into and deintercalated from the positive electrode and the negative electrode.

The rechargeable lithium battery may include a separator between the positive electrode and the negative electrode. The separator is impregnated with an electrolyte. It may be advantageous for the separator to maintain an original form thereof without undergoing thermal shrinkage in the electrolyte to secure the stability of the battery.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, which has a low dry shrinkage rate and a low shrinkage rate in an electrolyte, thereby increasing the stability of the battery.

Another example embodiment includes a rechargeable lithium battery including the separator for a rechargeable lithium battery.

An example embodiment includes a separator for a rechargeable lithium battery.

The separator for a rechargeable lithium battery includes a porous substrate and a coating layer on at least one surface of the porous substrate. The coating layer includes a cross-linked product of a binder, a cross-linking agent, and carboxyalkyl cellulose or a salt thereof, and a filler. The binder includes a (meth)acryl-based binder including a first structural unit derived from (meth)acrylamide, and a second structural unit derived from (meth)acrylamido sulfonic acid or a salt thereof. The cross-linking agent includes one or more of an aziridine-based cross-linking agent and a carbodiimide-based cross-linking agent.

The coating layer may have a thickness ranging from about 1 μm to about 3 μm.

Another example embodiment includes a rechargeable lithium battery.

The rechargeable lithium battery includes a positive electrode, a negative electrode, and a separator for a rechargeable lithium battery between the positive electrode and the negative electrode.

BRIEF DESCRIPTION OF THE DRAWINGS

FIG. 1 is a cross-sectional view illustrating a separator for a rechargeable lithium battery, according to one example embodiment.

FIGS. 2 to 5 are cross-sectional views schematically illustrating a rechargeable lithium battery, according to one example embodiment.

DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, and the like is described as being disposed "on" another part, it includes not only a case where the part is "directly on" another part, but

also a case where there are other parts therebetween.

Unless otherwise stated herein, the singular may also include the plural.

In the present specification, "a combination thereof" may indicate a mixture, stack, composite, copolymer, alloy, blend, or reaction product of constituents.

Unless otherwise defined herein, a particle diameter is an average particle diameter. In addition, the particle diameter refers to an average particle diameter D100, which refers to a diameter of a particle with a cumulative volume of 100% by volume in a particle diameter distribution. The average particle diameter D100 may be measured by methods known to those skilled in the art and for example, may be measured using a particle size analyzer, a transmission electron microscope photograph, or a scanning electron microscope photograph. As another method, the average particle diameter D100 may be obtained by measuring the particle diameter using a measuring device using dynamic light scattering, performing data analysis to count the number of particles for each particle size range, and then calculating the average particle diameter D100 therefrom. Alternatively, the average particle diameter D100 may be measured using a laser diffraction method. When measuring the average particle diameter by the laser diffraction method, for example, the average particle diameter D100 based on 100% of a particle diameter distribution in the measuring device may be calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W.

In this specification, 'particle diameter D50' refers to a particle diameter that indicates the diameter of a particle having a cumulative volume of 50% by volume in a particle size distribution. The above particle size distribution can be obtained by referring to the method described in the above 'particle diameter D100'.

In the present specification, "(meth)acryl" refers to acryl and/or methacryl.

Hereinafter, unless otherwise defined, "substitution" indicates that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10, R and R' are each independently hydrogen or a C1 to C6 alkyl group), a carboxybetaine group ($-RR'N+(CH_2)_nCOO-$, n is a natural number from 1 to 10, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R) (R denotes hydrogen, a C1 to C6 alkyl group, a C1 to C6 alkoxy group , or a C6 to C12 aryl group), a carboxyl group (-COOH) or a salt thereof (-C(=O)OM) (M denotes an organic or inorganic cation), a sulfonic acid group ($-SO_3H$) or a salt thereof ($-SO_3M$) (M denotes an organic or inorganic cation), and a phosphate group ($-PO_3H_2$) or a salt thereof ($-PO_3MH$ or $-PO_3M_2$) (M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, at least one of a C3 to C10 cycloalkylene group or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less (X≤ and ≤Y)."

A separator for a rechargeable lithium battery according to one example embodiment includes a porous substrate, and a coating layer located on at least one surface of the porous substrate, wherein the coating layer includes a cross-linked product of a binder, a cross-linking agent, and carboxyalkyl cellulose or a salt thereof, and a filler, the binder includes a (meth)acryl-based binder including a first structural unit derived from (meth)acrylamide and a second structural unit derived from (meth)acrylamido sulfonic acid or a salt thereof, and the cross-linking agent includes one or more of an aziridine-based cross-linking agent and a carbodiimide-based cross-linking agent.

According to one example embodiment, the coating layer may be formed of or include a composition including the (meth)acryl-based binder, one or more of the aziridine-based cross-linking agent and the carbodiimide-based cross-linking agent, the carboxyalkyl cellulose or salt thereof, and the filler.

According to one example embodiment, the cross-linked product may be or include a heat cross-linked product.

Since the coating layer includes the cross-linked product of the (meth)acryl-based binder, the cross-linking agent, and the carboxyalkyl cellulose or salt thereof, and the filler, the separator for a rechargeable lithium battery may have a significantly low dry shrinkage rate and shrinkage rate in an electrolyte. In particular, a separator in which the coating layer is coated only on one surface of the porous substrate may also have a significantly low dry shrinkage rate and shrinkage rate in an electrolyte.

According to one example embodiment, the dry shrinkage rate of the separator for a rechargeable lithium battery may be 5% or less in each of a mechanical direction (MD) and a transverse direction (TD), and the shrinkage rate in the electrolyte may be 15% or less, for example, 15% or less or 5% or less in each of the MD and the TD.

According to one example embodiment, the separator for a rechargeable lithium battery exhibits a significantly low shrinkage rate in the electrolyte. The shrinkage rate in the electrolyte may be obtained in consideration of an application location of the separator in the rechargeable lithium battery. The separator may be saturated with the electrolyte. A separator with a low shrinkage rate in an electrolyte can increase the stability of the battery by maintaining heat resistance properties without weakening the mechanical properties of the (meth)acryl-based binder when the separator is saturated with the electrolyte.

A separator formed of or including a composition including the (meth)acryl-based binder, but not including the aziridine-based cross-linking agent and the carbodiimide-based cross-linking agent as a cross-linking agent, or including a cross-linking agent other than the aziridine-based cross-linking agent and the carbodiimide-based cross-linking agent, may not satisfy the above shrinkage rate range in the electrolyte.

According to one example embodiment, one or more of the aziridine-based cross-linking agent and the carbodiimide-based cross-linking agent may be included in an amount of 95 wt% or more, for example, in the range of 98 wt% to 100 wt% or 100 wt% of the total cross-linking agent in the composition.

A separator formed of or including a composition including the aziridine-based cross-linking agent or the carbodiimide-based cross-linking agent and the filler, but not including the (meth)acryl-based binder, or including a binder other than the (meth)acryl-based binder, may not satisfy the above dry shrinkage rate and shrinkage rate ranges in the electrolyte.

According to one example embodiment, the (meth)acryl-based binder may be included in an amount of 95 wt% or more, for example, in the range of 98 wt% to 100 wt% or 100 wt% of the total binder in the composition.

A separator formed of or including a composition not including carboxyalkyl cellulose or a salt thereof may not satisfy the above dry shrinkage rate and shrinkage rate ranges in the electrolyte.

## Coating layer

The coating layer is or includes a heat-resistant layer and includes a (meth)acryl-based binder including a first structural unit derived from (meth)acrylamide and a second structural unit derived from (meth)acrylamido sulfonic acid or a salt thereof.

According to one example embodiment, a total of the first structural unit and the second structural unit among 100 mol% of the (meth)acryl-based binder may be 95 mol% or more, for example, in the range of 95 mol% to 100 mol% or 100 mol%.

The (meth)acryl-based binder may further include a third structural unit derived from (meth)acrylic acid or (meth) acrylate.

According to one example embodiment, a total of the first structural unit, the second structural unit, and the third structural unit among 100 mol% of the (meth)acryl-based binder may be 95 mol% or more, for example, in the range of 95 mol% to 100 mol% or 100 mol%.

The (meth)acryl-based binder is or includes a water-based heat-resistant binder, and may fix the filler to a porous substrate, provide bonding strength so that the coating layer is bonded to the porous substrate and an electrode, and contribute to increasing the heat resistance, air permeability, and oxidation resistance of the separator.

The first structural unit derived from (meth)acrylamide has an amide functional group ($-(C=O)-NH_2$) in the structural unit. The $-(C=O)-NH_2$ functional group can increase the bonding characteristics with the porous substrate and the electrode, and more firmly fix inorganic particles in the coating layer by forming a hydrogen bond with the -OH functional group of the filler, thereby reinforcing the heat resistance of the separator.

The second structural unit derived from the (meth)acrylamido sulfonic acid or a salt thereof may include a bulky functional group, thereby reducing the mobility of the binder including the bulky functional group and reinforcing the heat resistance of the separator.

The third structural unit derived from (meth)acrylic acid or (meth)acrylate may be configured to fix the filler on the porous substrate, and provide bonding strength so that the coating layer is bonded to the porous substrate and the electrode, and contribute to increasing the heat resistance and air permeability of the separator. In addition, the structural

unit derived from (meth)acrylic acid or (meth)acrylate may include a carboxyl functional group (-C(=O)O-) in the structural unit, thereby contributing to improving the dispersibility of a coating slurry.

The first structural unit is included in an amount ranging from 55 mol% to 95 mol% among 100 mol% of the (meth) acryl-based binder, for example, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94 95 mol%, from 70 mol% to 95 mol%, from 75 mol% to 95 mol%, from 80 mol% to 95 mol%, or from 80 mol% to 90 mol%.

A total of the second structural unit and the third structural unit may be included in an amount ranging from 5 mol% to 45 mol% among 100 mol% of the (meth)acryl-based binder, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45 mol%, from 5 mol% to 30 mol%, from 5 mol% to 25 mol%, from 5 mol% to 20 mol%, or from 10 mol% to 20 mol%.

The second structural unit may be included in an amount ranging from 0.1 mol% to 45 mol% among 100 mol% of the (meth)acryl-based binder, for example, 0.1, 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45 mol%, from 5 to 45 mol%, from 0.1 to 30 mol%, from 0.1 to 20 mol%, from 0.1 to 10 mol%, or from 1 to 10 mol%.

The third structural unit may be included in an amount ranging from 0 mol% to 30 mol% among 100 mol% of the (meth)acryl-based binder, for example, 0, 0.1, 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 mol%, from 1 to 30 mol%, from 1 to 20 mol%, from 1 to 10 mol%, from 5 to 15 mol%, or from 5 to 20 mol%.

When the content of each structural unit is within the above range, the heat resistance and bonding strength of the separator can be further increased.

The first structural unit derived from (meth)acrylamide may be represented by Chemical Formula 1 below:

Chemical Formula 1:

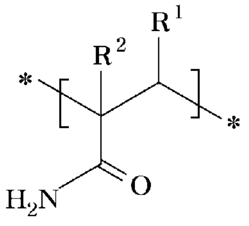

In Chemical Formula 1, $R^1$ and $R^2$ each independently is or includes hydrogen or a methyl group.

The second structural unit derived from (meth)acrylamido sulfonic acid or a salt thereof may be or include a structural unit derived from (meth)acrylamido sulfonic acid or (meth)acrylamido sulfonate, and the (meth)acrylamido sulfonate may be or include a conjugate base of (meth)acrylamido sulfonic acid, (meth)acrylamido sulfonate, or a derivative thereof. The structural unit derived from (meth)acrylamido sulfonic acid or (meth)acrylamido sulfonate may be, for example, represented by any one or more of Chemical Formulas 2, 3, and 4, below and a combination thereof:

Chemical Formula 2:

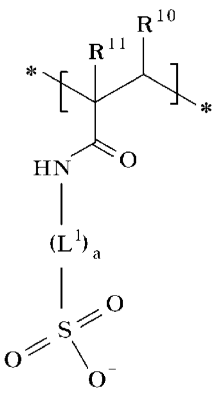

Chemical Formula 3:

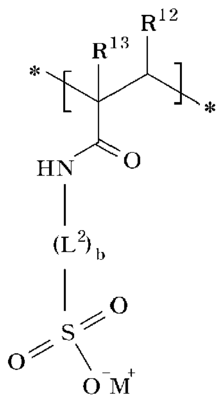

Chemical Formula 4:

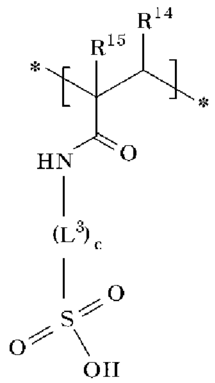

in Chemical Formulas 2 to 4,
$R^{10}$, $R^{11}$, $R^{12}$, $R^{13}$, $R^{14}$, and $R^{15}$ each independently is or includes hydrogen or a methyl group,
$L^1$, $L^2$, and $L^3$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, and c may each be independently an integer ranging from 0 to 2,
M may be or include an alkali metal, and
the alkali metal may be or include, for example, at least one of lithium, sodium, potassium, rubidium, or cesium.

As an example, in Chemical Formulas 2 to 4, $L^1$, $L^2$, and $L^3$ may each independently be or include a substituted or unsubstituted C1 to C10 alkylene group, and a, b, and c may each be equal to 1.

The structural unit derived from (meth)acrylamido sulfonic acid or a salt thereof may include one or two or more of the structural unit represented by Chemical Formula 2, the structural unit represented by Chemical Formula 3, and the structural unit represented by Chemical Formula 4. As an example, the above structural unit may include the structural unit represented by Chemical Formula 2, and as another example, include the structural unit represented by Chemical Formula 2 and the structural unit represented by Chemical Formula 3 together.

When the structural unit represented by Chemical Formula 2 and the structural unit represented by Chemical Formula 3 are included together, a molar ratio of the structural unit represented by Chemical Formula 2 and the structural unit represented by Chemical Formula 3 may range from 10:1 to 1:2, for example, from 5:1 to 1:1, or for example, from 3:1 to 1:1.

A sulfonate group in the structural unit derived from (meth)acrylamido sulfonic acid or a salt thereof may be or include, for example, a functional group derived from at least one of vinyl sulfonic acid, allyl sulfonic acid, styrene sulfonic acid, anethole sulfonic acid, acrylamidoalkane sulfonic acid, sulfoalkyl (meth)acrylate, or a salt thereof. Here, the alkane may be or include at least one of a C1 to C20 alkane, a C1 to C10 alkane, or a C1 to C6 alkane, and the alkyl may be or include at least one of a C1 to C20 alkyl, a C1 to C10 alkyl, or a C1 to C6 alkyl. The salt refers to a salt composed of the above-described sulfonic acid and a desired ion. The ion may be or include, for example, an alkali metal ion, and in this case, the salt may be or include a sulfonic acid alkali metal salt.

The acrylamidoalkane sulfonic acid may be or include, for example, 2-acrylamido-2-methylpropane sulfonic

acid.

The third structural unit derived from (meth)acrylic acid or (meth)acrylate may be, for example, represented by any one or more of Chemical Formulas 5, 6, and 7, below and a combination thereof:

Chemical Formula 5:

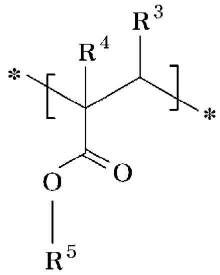

Chemical Formula 6:

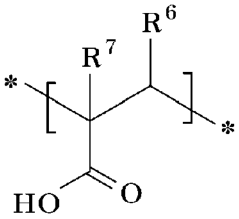

Chemical Formula 7:

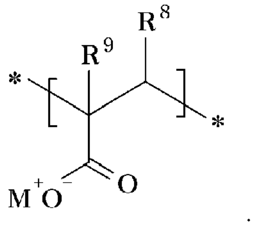

In Chemical Formulas 5 to 7,

$R^3$, $R^4$, $R^6$, $R^7$, $R^8$, and $R^9$ each independently is or includes hydrogen or a methyl group,
$R^5$ is or includes a substituted or unsubstituted C1 to C20 alkyl group, and
M is or includes an alkali metal.

The structural unit derived from (meth)acrylate may be derived from at least one of (meth)acrylic acid alkyl esters, (meth)acrylic acid perfluoroalkyl esters, and (meth)acrylate having a functional group in a side chain, for example, derived from a (meth)acrylic acid alkyl ester. In addition, the carbon number of an alkyl group or perfluoroalkyl group bonded to the non-carbonyl oxygen atom of the (meth)acrylic acid alkyl ester or the (meth)acrylic acid perfluoroalkyl ester may for example range from 1 to 20, for example, from 1 to 10, for example, from 1 to 5.

Examples of (meth)acrylic acid alkyl esters in which the alkyl group or perfluoroalkyl group bonded to the non-carbonyl oxygen atom has 1 to 5 carbon atoms may include acrylic acid alkyl esters such as at least one of methyl acrylate, ethyl acrylate, n-propyl acrylate, isopropyl acrylate, n-butyl acrylate, or t-butyl acrylate; acrylic acid-2-(perfluoroalkyl) ethyls such as acrylic acid-2-(perfluorobutyl)ethyl, or acrylic acid-2-(perfluoropentyl) ethyl; alkyl methacrylates such as methyl methacrylate, ethyl methacrylate, n-propyl methacrylate, isopropyl methacrylate, n-butyl methacrylate, and t-butyl methacrylate; and methacrylic acid-2-(perfluoroalkyl) ethyls such as methacrylic acid-2-(perfluorobutyl) ethyl or methacrylic acid-acid-2-(perfluoropentyl) ethyl.

Examples of other (meth)acrylic acid alkyl esters may include acrylic acid alkyl esters having 6 to 18 carbon atoms in the alkyl group bonded to the non-carbonyl oxygen atom such as or including at least one of acrylic acid n-hexyl,

acrylic acid-2-ethylhexyl, acrylic acid nonyl, acrylic acid lauryl, acrylic acid stearyl, acrylic acid cyclohexyl, or acrylic acid isobornyl; methacrylic acid alkyl esters having 6 to 18 carbon atoms in the alkyl group bonded to the non-carbonyl oxygen atom such as or including at least one of methacrylic acid n-hexyl, methacrylic acid-2-ethylhexyl, methacrylic acid octyl, methacrylic acid isodecyl, methacrylic acid lauryl, methacrylic acid tridecyl, methacrylic acid stearyl, or methacrylic acid cyclohexyl; acrylic acid-2-(perfluoroalkyl) ethyls having 6 to 18 carbon atoms in the perfluoroalkyl group bonded to the non-carbonyl oxygen atom such as or including at least one of acrylic acid-2-(perfluorohexyl)ethyl, acrylic acid-2-(perfluorooctyl) ethyl, acrylic acid-2-(perfluoronitrile) ethyl, acrylic acid-2-(perfluorodecyl) ethyl, acrylic acid-2-(perfluorodecyl) ethyl, acrylic acid-2-(perfluorotetradecyl) ethyl, or acrylic acid-2-(perfluorokexadecyl) ethyl; and methacrylic acid-2-(perfluoroalkyl) ethyls having 6 to 18 carbon atoms in the perfluoroalkyl group bonded to the non-carbonyl oxygen atom such as or including at least one of methacrylic acid-2-(perfluorohexyl) ethyl, methacrylic acid-2-(perfluorooctyl) ethyl, methacrylic acid-2-(perfluoronyl) ethyl, methacrylic acid-2-(perfluorodecyl) ethyl, methacrylic acid-2-(perfluorododecyl) ethyl, methacrylic acid-2-(perfluorotetradecyl) ethyl, or methacrylic acid-2-(perfluorohexadecyl) ethyl.

The structural unit derived from (meth)acrylic acid, (meth)acrylate, or a salt thereof may include one or all of the structural unit represented by Chemical Formula 5, the structural unit represented by Chemical Formula 6, and the structural unit represented by Chemical Formula 7, and when all are included, the structural unit represented by Chemical Formula 5, the structural unit represented by Chemical Formula 6, and the structural unit represented by Chemical Formula 7 may be included in a molar ratio ranging from 10:1 to 1:1, for example, from 6:1 to 1:1, and for example, from 3:1 to 1:1.

The (meth)acryl-based binder may be, for example, represented by Chemical Formula 8 below:

Chemical Formula 8:

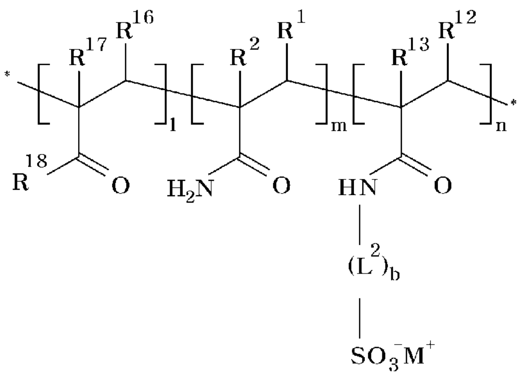

In Chemical Formula 8,

$R^1$, $R^2$, $R^{12}$, $R^{13}$, $R^{16}$, and $R^{17}$ each independently is or includes hydrogen or a methyl group,
$R^{18}$ is or includes OR or $O-M^+$, wherein R is or includes hydrogen or a C1 to C6 alkyl group, M is an alkali metal,
$L^2$ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
b is an integer ranging from 0 to 2,
M is or includes an alkali metal, and
l, m, and n refer to a molar ratio of each unit.

The alkali metal may be or include, for example, at least one of lithium, sodium, potassium, rubidium, or cesium.

As an example, in Chemical Formula 8, $l+m+n=1$. In addition, as an example, $0.05\leq(l+n)\leq0.45$ and $0.55\leq m\leq0.95$, for example, $0\leq l\leq0.4$ and $0\leq n\leq0.1$, for example, $0.8\leq m\leq0.9$, $0\leq l\leq0.1$, and $0\leq n\leq0.1$, or for example, $0.8\leq m\leq0.9$, $0.01\leq l\leq0.1$, and $0.01\leq n\leq0.1$.

As an example, in Chemical Formula 8, $L^2$ may be or include a substituted or unsubstituted C1 to C10 alkylene group, and b may be equal to 1.

In the (meth)acryl-based binder, the structural unit substituted with an alkali metal ($M^+$) may be present in an amount ranging from 50 mol% to 100 mol%, for example, from 60 mol% to 90 mol% or from 70 mol% to 90 mol% with respect to 100 mol% of the total amount of (meth)acrylamido sulfonic acid structural unit. When the above range is satisfied, the (meth)acryl-based binder and the separator including the (meth)acryl-based binder can exhibit desired or improved bonding strength, heat resistance, and oxidation resistance.

The (meth)acryl-based binder may further include other units in addition to the above-described units. For example, the (meth)acryl-based binder may further include a unit derived from an alkyl (meth)acrylate, a unit derived from a diene-based binder, a unit derived from a styrene-based binder, an ester group-containing unit, a carbonate group-containing unit, or a combination thereof.

The (meth)acryl-based binder may be in various forms, such as an alternating polymer in which the units are alternately distributed, a random polymer in which the units are randomly distributed, or a graft polymer in which some structural units are grafted.

A weight average molecular weight of the (meth)acryl-based binder may range from 350,000 to 970,000, for example, from 450,000 to 970,000 or from 450,000 to 700,000. When the weight average molecular weight of the (meth) acryl-based binder satisfies the above range, the (meth)acryl-based binder and the separator including the (meth)acryl-based binder can exhibit desired or improved bonding strength, heat resistance, and air permeability. The weight average molecular weight may be a polystyrene-converted average molecular weight measured using gel permeation chromatography.

The (meth)acryl-based binder may be prepared by various known methods such as, e.g., emulsion polymerization, suspension polymerization, bulk polymerization, or solution polymerization.

The (meth)acryl-based binder may be prepared by a solution polymerization method.

According to one example embodiment, the (meth)acryl-based binder may be included in the coating layer of the separator in the form of a film.

The (meth)acryl-based binder may be included in an amount ranging from 30 wt% to 70 wt%, for example, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, from 30 to 60 wt% or from 40 to 60 wt% of the total of the (meth)acryl-based binder, the cross-linking agent, and the carboxyalkyl cellulose or salt thereof. Within the above range, it is possible to improve heat resistance properties in the electrolyte.

The cross-linking agent may include one or more of an aziridine-based cross-linking agent and a carbodiimide-based cross-linking agent.

The aziridine-based cross-linking agent and the carbodiimide-based cross-linking agent may crosslink the (meth)acryl-based binder, and allow the separator to readily satisfy the above dry shrinkage rate and shrinkage rate ranges in the electrolyte. For example, the cross-linking agent may be or include an aziridine-based cross-linking agent. The aziridine-based cross-linking agent can further reduce the dry shrinkage rate and the shrinkage rate in the electrolyte compared to the carbodiimide-based cross-linking agent.

The aziridine-based cross-linking agent may be or include at least one of a bi-functional or higher aziridine-based cross-linking agent. Here, "bi-functional or higher" indicates that two or more aziridine groups are present in a molecule. According to one example embodiment, the aziridine-based cross-linking agent may be or include at least one of a bi- or tri-functional aziridine-based cross-linking agent.

For example, the aziridine-based cross-linking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

The carbodiimide-based cross-linking agent may include one or more of a monocarbodiimide-based compound and a polycarbodiimide-based compound.

According to one example embodiment, the carbodiimide-based cross-linking agent may be or include a monocarbodiimide-based compound having the chemical formula R-N=C=N-R' (R and R' each independently is or includes a substituted or unsubstituted C1 to C5 alkyl group or a substituted or unsubstituted C5 to C10 cycloalkyl group).

According to another example embodiment, the carbodiimide-based cross-linking agent may be or include a polycarbodiimide-based compound prepared by subjecting a diisocyanate to a decarboxylation condensation reaction in the presence of a carbodiimide catalyst.

The diisocyanate included in the decarboxylation condensation reaction may include, for example, at least one of 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylene diisocyanate.

In addition, examples of the carbodiimide catalyst that can be included in the decarboxylation condensation reaction may include phosphorene oxides such as at least one of a 1-phenyl-2-phosphorene-1-oxide, a 3-methyl-2-phosphorene-1-oxide, a 1-ethyl-3-methyl-2-phosphorene-1-oxide, a 1-ethyl-2-phosphorene-1-oxide, or 3-phosphorene isomers thereof.

One or more of the cross-linking agents, for example, the aziridine-based cross-linking agent and the carbodiimide-based cross-linking agent, may be included in a desired content with respect to the binder, for example, the (meth)acryl-based binder, and the carboxyalkyl cellulose or salt thereof.

According to one example embodiment, the cross-linking agent may be included in an amount ranging from 5 wt% to 30 wt%, for example, 5, 6, 7, 8, 9, 10, 11, 12, 13, 14, 15, 16, 17, 18, 19, 20, 21, 22, 23, 24, 25, 26, 27, 28, 29, 30 wt%, from 10 to 30 wt% or from 10 to 20 wt% of the total of the (meth)acryl-based binder, the cross-linking agent, and the carboxyalkyl cellulose or salt thereof. Within the above range, it is possible to improve heat resistance properties in the electrolyte.

One or more of the cross-linking agents, for example, the aziridine-based cross-linking agent and the carbodiimide-based cross-linking agent may be included in a desired content with respect to the binder, for example, the (meth) acryl-based binder. For example, the cross-linking agent may be included in an amount ranging from 5 wt% to 50 wt%, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 wt%, for example, from 10 to 50 wt%, from 20 to 50 wt%, or from 10 to 20 wt% with respect to the (meth)acryl-based binder. Within the above range, it is possible to increase heat resistance.

The carboxyalkyl cellulose or salt thereof may react with the cross-linking agent by having a cyclic structure in a molecule and having a carboxyl group in the molecule, making it possible to increase a modulus of the coating layer and further reduce the dry shrinkage rate and the shrinkage rate in the electrolyte.

The carboxyalkyl cellulose may be or include, for example, carboxymethyl cellulose.

The salt of the carboxyalkyl cellulose is a salt of carboxyalkyl cellulose and may be or include, for example, a monovalent metal salt of carboxyalkyl cellulose, for example, a sodium salt of carboxyalkyl cellulose.

The carboxyalkyl cellulose or salt thereof may be included in a desired content with respect to the binder, for example, the (meth)acryl-based binder and the cross-linking agent.

According to one example embodiment, the carboxyalkyl cellulose or salt thereof may be included in an amount ranging from 20 to 70 wt%, for example, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, 20 to 65 wt%, 20 to 60 wt%, 30 to 70 wt%, 30 to 60 wt%, or 40 to 60 wt% of the total of the (meth)acryl-based binder, the cross-linking agent, and the carboxyalkyl cellulose or salt thereof. Within the above range, it is possible to improve heat resistance properties in the electrolyte.

The filler may include a filler with a particle diameter D100 of 1.0 μm or less. Within the above range, it is possible to readily satisfy the dry shrinkage rate and the shrinkage rate in the electrolyte when the filler is combined with the (meth) acryl-based binder, the cross-linking agent, and the carboxyalkyl cellulose or salt thereof. For example, the filler may have a particle diameter D100 of 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0 μm, 0.8 μm or less, 0.7 μm or less, ranging from 0.1 μm to 0.8 μm, from 0.1 μm to 0.7 μm, or from 0.5 μm to 0.8 μm.

According to one example embodiment, the filler may have a particle diameter D50 of 0.4 μm or less, for example, 0.05, 0.1, 0.15, 0.2, 0.25, 0.3, 0.35, 0.4 μm, 0.35 μm or less, 0.3 μm or less, or ranging from 0.1 μm to 0.3 μm. Within the above range, it is possible to improve heat resistance properties.

According to one example embodiment, the filler with a particle diameter D100 of 1.0 μm or less may be included in an amount of 95 wt% or more of the total filler in the coating layer, for example, ranging 95 wt% to 100 wt%, from 98 wt% to 100 wt%, or 100 wt%. Within the above range, the effects of the separator can be readily realized.

According to one example embodiment, the filler may or may not be surface-modified.

The surface modification may include modifying a surface of the filler to have an amino group. Here, the "amino group" may refer to $*N(R^1)(R^2)$ (here, $R^1$ and $R^2$ each is or includes hydrogen or a substituted or unsubstituted C1 to C10 alkyl group), and for example refer to a $-NH_2$ group. Such surface modification can expand the particle diameter range of the filler required to provide the dry shrinkage rate and the shrinkage rate in the electrolyte compared to a case of using a filler not surface-modified.

According to one example embodiment, the surface modification may include surface treating a filler, which has not been surface-modified, with an amino silane compound. The amino silane compound may include a silane compound having one or more nitrogens, for example, 1 to 6 nitrogens.

In one example embodiment, the amino silane compound may include, but is not limited to one or more of compounds represented by Chemical Formulas 9, 10, and 11 below:

Chemical Formula 9:

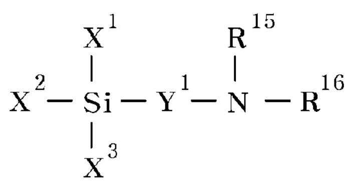

Chemical Formula 10:

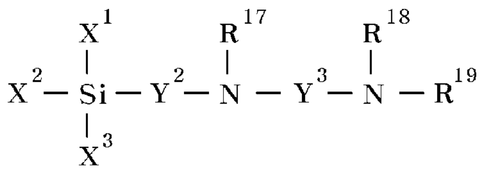

Chemical Formula 11:

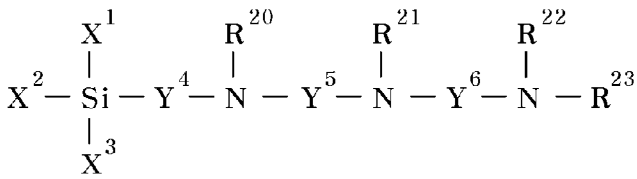

.

In Chemical Formulas 9 to 11,

$X^1$, $X^2$, and $X^3$ each independently is or includes hydrogen, a hydroxyl group, a substituted or unsubstituted C1 to C20 alkyl group, a substituted or unsubstituted C6 to C20 aryl group, a substituted or unsubstituted C3 to C20 cycloalkyl group, a substituted or unsubstituted C7 to C20 arylalkyl group, a substituted or unsubstituted C1 to C20 alkoxy group, or a substituted or unsubstituted C6 to C20 aryloxy group,
at least one of $X^1$, $X^2$, and $X^3$ is or includes a hydroxyl group, a substituted or unsubstituted C1 to C20 alkoxy group, or a substituted or unsubstituted C6 to C20 aryloxy group,
$Y^1$, $Y^2$, $Y^3$, $Y^4$, $Y^5$, and $Y^6$ each is or includes independently a divalent C1 to C20 aliphatic hydrocarbon group, a divalent C5 to C20 alicyclic hydrocarbon group, or a divalent C6 to C20 aromatic hydrocarbon group, and
$R^{15}$, $R^{16}$, $R^{17}$, $R^{18}$, $R^{19}$, $R^{20}$, $R^{21}$, $R^{22}$, and $R^{23}$ each independently is or includes hydrogen, a hydroxyl group, a substituted or unsubstituted monovalent aliphatic hydrocarbon group having 1 to 20 carbon atoms, a substituted or unsubstituted monovalent alicyclic hydrocarbon group having 3 to 20 carbon atoms, or a substituted or unsubstituted monovalent aromatic hydrocarbon group having 6 to 20 carbon atoms.

For example, the amino silane compound may include one or more of 3-aminopropyltriethoxysilane, 3-aminopropyltrimethoxysilane, 3-aminopropylmethyldimethoxysilane, 3-aminopropylmethyldiethoxysilane, aminoethylaminopropyltri methoxysilane, aminoethylaminopropyltriethoxysilane, aminoethylaminopropylmethyldimethoxysilane, aminoethylaminopropylmethyldiethoxysilane, aminoethylaminomethyltriethoxysilane, aminoethylaminomethylmethyldiethoxysilane, diethylenetriaminopropyltrimethoxysilane, diethylenetriaminopropyltriethoxysilane, diethylenetriaminopropylmethyldimethoxysilane, diethylenetriaminopropylmethyldiethoxysilane, or diethylenetriaminomethylmethyldiethoxysilane, but is not limited thereto.

According to one example embodiment, the surface modification may be performed by typical methods using an amino silane compound.

The filler may be or include, for example, an inorganic filler, an organic filler, an organic-inorganic composite filler, or a combination thereof. The inorganic filler may be or include a ceramic material that can increase heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include at least one of an acrylic compound, an imide compound, an amide compound, or a combination thereof, but is not limited thereto. The organic filler may have a core-shell structure, but is not limited thereto. For example, the filler may be boehmite.

The filler may be substantially spherical, substantially plate-shaped, substantially cubic, or amorphous. For example, the filler may be cubic, and the cubic shape can significantly reduce the shrinkage rate.

The filler may be included in a desired content with respect to the binder, for example, the (meth)acryl-based binder. According to one example embodiment, the (meth)acryl-based binder and the filler may be included in a mass ratio of 1:10 to 1:50, 1:10, 1:11, 1:12, 1:13, 1:14, 1:15, 1:16, 1:17, 1:18, 1:19, 1:20, 1:21, 1:22, 1:23, 1:24, 1:25, 1:26, 1:27, 1:28, 1:29, 1:30, 1:31, 1:32, 1:33, 1:34, 1:35, 1:36, 1:37, 1:38, 1:39, 1:40, 1:41, 1:42, 1:43, 1:44, 1:45, 1:46, 1:47, 1:48, 1:49, 1:50, for example, 1:20 to 1:30. Within the above range, it is possible to improve heat resistance properties in the electrolyte.

The filler may be included in an amount ranging from 50 wt% to 99 wt%, for example, from 70 wt% to 99 wt%, for

example, from 75 wt% to 99 wt%, for example, from 80 wt% to 99 wt%, for example, from 85 wt% to 99 wt%, for example, from 90 wt% to 99 wt%, or for example, from 95 wt% to 99 wt% of the total amount of the coating layer. When the filler is included within the above range, the separator can exhibit desired or improved heat resistance, durability, oxidation resistance, and stability.

Each coating layer may have a thickness ranging from 0.01 μm to 20 μm, and within the above range, may have a thickness ranging from 1 μm to 10 μm, from 1 μm to 5 μm, or from 1 μm to 3 μm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator can exhibit desired or improved air permeability, heat resistance, bonding strength, and the like. Herein, "thickness of the coating layer" indicates a thickness of one coating layer when the coating layer is formed on only one surface of the porous substrate, and indicates a thickness of two coating layers when the coating layer is formed on both surfaces of the porous substrate.

**Porous substrate**

The porous substrate may be or include a substrate having multiple pores and commonly included in electrochemical devices. The porous substrate may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. For example, the polyolefin-based resin may include a non-olefin resin in addition to an olefin resin or include a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment may have a desired or improved bonding strength. For example, the separator for a rechargeable lithium battery may have a bonding strength of 0.05 gf/mm or more, for example, in the range of 0.05 gf/mm to 0.1 gf/mm, for example, 0.05 gf/mm to 0.2 gf/mm. The bonding strength may be measured by the following method.

A separator for a rechargeable lithium battery is located between a positive electrode and a negative electrode, and the separator is bonded to the positive electrode and the negative electrode by passing between rolls with a pressure of 250 kgf at a speed of 150 mm/sec in an 80°C chamber. A sample is produced by cutting the separator bonded to the positive electrode and the negative electrode to a width of 25 mm and a length of 50 mm. A universal testing machine (UTM) is used as a bonding strength measurement device. In the above sample, the separator is separated from a negative electrode plate by 10 to 20 mm, then the separator is fixed to an upper grip and the negative electrode plate is fixed to a lower grip so that a gap between the grips is 20 mm, and then peeled by being pulled in a 180° direction. After the peeling is started at a peeling speed of 20 mm/min, an average value was obtained by measuring a force required to peel 40 mm three times. The average value is calculated as the average value of the measured values.

The separator for a rechargeable lithium battery according to one example embodiment may exhibit desired or improved air permeability and have an air permeability value of, for example, less than 200 sec/100 cc, for example, 190 sec/100 cc or less, or 180 sec/100 cc or less. That is, the separator may have an air permeability value of less than 40 sec/100 cc·1 μm per unit thickness, for example, 30 sec/100 cc·1 μm or less, or 25 sec/100 cc·1 μm or less. Here, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using an air permeability measurement device (EG01-55-1MR, Asahi Seiko Co., Ltd.).

The separator for a rechargeable lithium battery according to one example embodiment may be formed by applying a composition for forming a coating layer on one surface or both surfaces of the porous substrate, drying, and then curing the composition on the porous substrate. The curing may be performed using, e.g., conventional methods known to those skilled in the art.

FIG. 1 is a cross-sectional view illustrating a separator for a rechargeable lithium battery, according to one example embodiment. Referring to FIG. 1, the separator for a rechargeable lithium battery includes a porous substrate 1 and a coating layer 2 located on both surfaces of the porous substrate 1. The coating layer 2 may include a filler 3, a cross-linked product 4 of a (meth)acryl-based binder and a cross-linking agent, and carboxyalkyl cellulose or a salt thereof (not shown).

Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be located between the positive electrode and the negative electrode.

Positive electrode

A positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_dX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content that is greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder is configured to attach the positive electrode active material particles to each other and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber, a conductive polymer

such as a polyphenylene derivative, or a mixture thereof.

Al may be included as the current collector, but is not limited thereto.

Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, substantially sheet-shaped, substantially flake-shaped, substantially sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other, and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder

may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber, a conductive polymer such as a polyphenylene derivative, or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

<u>Electrolyte Solution</u>

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio of 1:1 to 1:9.

The lithium salt dissolved in the organic solvent is configured lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on shape thereof.

FIGS. 2 to 5 are schematic views illustrating rechargeable lithium batteries, according to example embodiments. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are only one example embodiment of the present invention, and the present disclosure is not limited

to the following examples.

**Preparation Example 1**

In a 10 L four-necked flask provided with a stirrer, a thermometer, and a cooling tube, a process of adding distilled water (6361 g), acrylic acid (1.0 mol), acrylamide (8.5 mol), potassium persulfate (0.01 mol), 2-acrylamido-2-methylpropanesulfonic acid (0.5 mol), and a 5N aqueous lithium hydroxide solution (1.05 equivalents with respect to a total amount of 2-acrylamido-2-methylpropanesulfonic acid), then reducing an internal pressure to 10 mmHg using a diaphragm pump, and returning the internal pressure to a normal pressure using nitrogen was repeated three times.

The reaction was carried out for 12 hours while controlling the temperature of the reaction solution to be stable between 65 °C and 70 °C. After cooling to room temperature, the pH of the reaction solution was adjusted to 7 to 8 using a 25% aqueous ammonia solution.

Accordingly, poly(acrylic acid-co-acrylic acid lithium salt-co-acrylamide-co-2-acrylamido-2-methylpropane sulfonic acid lithium salt) was prepared. A molar ratio of acrylic acid + lithium acrylic acid salt, acrylamide, and 2-acrylamido-2-methylpropane sulfonic acid lithium salt was 10:85:5. A non-volatile component in about 10 mL of the reaction solution (reaction product) was measured, and the measurement result was 9.5 wt% (theoretical value: 10%).

**Preparation Example 2**

An acryl-based binder was prepared in the same manner as Preparation Example 1, with a difference that acrylic acid and acrylamide were used and 2-acrylamido-2-methylpropane sulfonic acid was not used. A molar ratio of acrylic acid + lithium acrylic acid salt and acrylonitrile was 42:58. The non-volatile component of the reaction solution was 9.0 wt% (theoretical value: 10%).

**Preparation Example 3**

An acryl-based binder was prepared in the same manner as Preparation Example 1, with a difference that acrylic acid and 2-acrylamido-2-methylpropane sulfonic acid were used and acrylamide was not used. A molar ratio of acrylic acid and 2-acrylamido-2-methylpropane sulfonic acid was 74:26. The non-volatile component of the reaction solution was 9.0 wt% (theoretical value: 10%).

**Preparation Example 4**

An acryl-based binder was prepared in the same manner as Preparation Example 1, with a difference that acrylamide and 2-acrylamido-2-methylpropane sulfonic acid were used and acrylic acid was not used. A molar ratio of acrylamide and 2-acrylamido-2-methylpropane sulfonic acid was 74:26. The non-volatile component of the reaction solution was 9.0 wt% (theoretical value: 10%).

**Example 1**

A dispersion was prepared by mixing the acryl-based binder (10 wt% in distilled water) prepared in Preparation Example 1 and boehmite (particle diameter D100: 0.5 μm, particle diameter D50: 0.2 μm, cubic) as a filler at a mass ratio of acryl-based binder:filler=1:30 based on solid content, adding the mixture to a water solvent, and then milling and dispersing the mixture at 25 °C for 30 minutes using a bead mill.

A composition for forming a coating layer was prepared by adding trimethylolpropane tris (2-methyl-1-aziridine propionate (tri-functional aziridine-based cross-linking agent) as an aziridine-based cross-linking agent and carboxyalkyl cellulose (CMC) and adding water so that the total solid content became 20 wt%. In this case, the acryl-based binder:carboxyalkyl cellulose:aziridine-based cross-linking agent ratio was 45:45: 10 (parts by weight) of the total of 100 parts by weight.

A separator for a rechargeable lithium battery was manufactured by coating both surfaces of a polyethylene film (thickness: 8 μm, SK Company, air permeability: 120 sec/100 cc, and puncture strength: 480 kgf) as a porous substrate with the composition for forming a coating layer using a die coating method and then drying and aging the composition on the porous substrate in an oven at 80 °C for 16 hours.

**Examples 2 to 8**

A separator for a rechargeable lithium battery was manufactured in the same manner as in Example 1, with a difference that in Example 1, as shown in Table 1 below, boehmite (cubic) was used as a filler, but the D50 and D100 were

changed, the weight ratio of the acryl-based binder and the filler was changed, and the contents of the acryl-based binder, the carboxyalkyl cellulose, and the aziridine-based cross-linking agent were changed.

**Example 9**

A separator for a rechargeable lithium battery was manufactured in the same manner as in Example 1, with a difference that a carbodiimide-based cross-linking agent CARBODILITE V-05 (Nisshinbo Chemical) was used instead of an aziridine-based cross-linking agent.

**Example 10**

A separator for a rechargeable lithium battery was manufactured in the same method as in Example 1, with a difference that in Example 1, boehmite (particle diameter D50: 0.5μm, particle diameter D50: 0.2 μm, plate-shaped) was used.

**Example 11**

Boehmite (particle diameter D100: 0.5 μm, particle diameter D50: 0.2 μm) surface-modified with 3-aminopropyltrimethoxysilane was prepared by adding 3-aminopropyltrimethoxysilane corresponding to 0.05 mmol per solid content of boehmite (particle diameter D100: 0.5 μm, particle diameter D50: 0.2 μm, cubic) to dry toluene and refluxing the same at 80 °C. The surface-modified boehmite has an amino group ($-NH_2$) on an outermost surface thereof.
A separator for a rechargeable lithium battery was manufactured in the same manner as in Example 1 using the prepared surface-modified boehmite.

**Examples 12 to 17**

A separator for a rechargeable lithium battery was manufactured in the same manner as in Example 11, with a difference that in Example 1, as shown in Table 2 below, modified boehmite (cubic) was used as a filler, but the D50 and D100 were changed, the weight ratio of the acryl-based binder and the filler was changed, and the contents of the acryl-based binder, the carboxyalkyl cellulose, and the aziridine-based cross-linking agent were changed.

**Comparative Examples 1 to 8**

A separator for a rechargeable lithium battery was manufactured in the same manner as in Example 1, with a difference that in Example 1, as shown in Table 1 below, boehmite (cubic) was used as a filler, but the D50 and D100 were changed, the weight ratio of the acryl-based binder and the filler was changed, and the contents of the acryl-based binder, the carboxyalkyl cellulose, and the aziridine-based cross-linking agent were changed.
PVA is a homopolymer of polyvinyl alcohol.
An epoxy-based cross-linking agent is ethylene glycol diglycidyl ether.
PVDF is polyvinylidene fluoride.
SBR is styrene butadiene rubber.

**Dry shrinkage rate (units: %)**

Samples were manufactured by cutting the separators for a rechargeable lithium battery of Examples and Comparative Examples to a size of 8 cm × 8 cm. A shrinkage rate in each of a mechanical direction (MD) and a transverse direction (TD) was calculated by drawing a square with a size of 5 cm×5 cm on surfaces on the samples, then putting the samples between pieces of paper or alumina powder, leaving the samples in an oven at 150 °C for 1 hour, taking the sample out, and then measuring the side dimensions of the drawn square. The shrinkage rate was calculated according to Equation 1 below.

Equation 1:

$$\text{Shrinkage rate} = (L0 - L1) / L0 \times 100.$$

L0 denotes an initial length of the separator, and L1 denotes a length of the separator after being left at 150 °C for 1 hour.

**Shrinkage rate in electrolyte (units: %)**

Samples were manufactured by cutting the separators for a rechargeable lithium battery of Examples and Comparative Examples to a size of 8 cm × 8 cm. A square with a size of 5 cm ×5 cm was drawn on surfaces of the samples.
A positive electrode slurry was prepared by mixing 97 wt% LiCoNiAl as a positive electrode active material, 1.5 wt% carbon nanotubes, and 1.5 wt% polyvinyl fluoride as a conductive material and adding water thereto.
A positive electrode was manufactured by applying the prepared positive electrode slurry to aluminum foil, and drying and rolling the prepared positive electrode slurry and aluminum foil.
A negative electrode active material slurry was prepared by mixing 97.4 wt% a negative electrode active material, 1.0 wt% carboxymethyl cellulose, 1.5 wt% styrene-butadiene-based rubber, and 0.1 wt% carbon nanotubes as a conductive agent. A silicone-based negative electrode active material was used as the negative electrode active material. A negative electrode was manufactured by applying the prepared negative electrode slurry to aluminum foil and drying and rolling the prepared negative electrode slurry and aluminum foil.
One sample was located between the positive electrode and the negative electrode to form three sets of positive electrode-sample-negative electrode laminates, which were then put in a pouch. 2 g of an electrolyte (ethylene carbonate, ethyl methyl carbonate, and dimethyl carbonate (a volume ratio of 30:50:20) in which 1.5M $LiPF_6$ was dissolved) was injected to completely saturate the laminate with the electrolyte, which was sealed and left at 25 °C for 12 hours. Then, a shrinkage rate in each of the MD and the TD was calculated by leaving the laminate in the oven at 150 °C for 1 hour, then taking the sample out, and measuring the side dimensions of the drawn square. The shrinkage rate was calculated according to Equation 1.

Table 1:

| | Filler | | Binder: Filler | Binder | Compound | Cross-linking agent | Binder:compo und:cross-linking agent | Dry shrinkage rate | | Shrinkage rate in electrolyte | |
|---|---|---|---|---|---|---|---|---|---|---|---|
| | D50 | D100 | | | | | | MD | TD | MD | TD |
| Exampl e 1 | 0.2 | 0.5 | 1:30 | Preparation Example 1 | CMC | Aziridine | 45:45:10 | 2 | 2 | 12 | 15 |
| Exampl e 2 | 0.2 | 0.5 | 1:25 | Preparation Example 1 | CMC | Aziridine | 45:45:10 | 1.5 | 2 | 11 | 13 |
| Exampl e 3 | 0.2 | 0.5 | 1:20 | Preparation Example 1 | CMC | Aziridine | 45:45:10 | 1.5 | 1.5 | 3 | 4 |
| Exampl e 4 | 0.2 | 0.5 | 1:25 | Preparation Example 1 | CMC | Aziridine | 40:50:10 | 1.5 | 2 | 13 | 12 |
| Exampl e 5 | 0.2 | 0.5 | 1:25 | Preparation Example 1 | CMC | Aziridine | 50:40:10 | 2 | 1.5 | 7 | 8 |
| Exampl e 6 | 0.2 | 0.5 | 1:25 | Preparation Example 1 | CMC | Aziridine | 40:40:20 | 2 | 2 | 6 | 9 |
| Exampl e 7 | 0.3 | 0.8 | 1:20 | Preparation Example 1 | CMC | Aziridine | 45:45:10 | 1.5 | 2 | 12 | 13 |
| Exampl e 8 | 0.3 | 0.8 | 1:20 | Preparation Example 4 | CMC | Aziridine | 45:45:10 | 2.0 | 2.0 | 9 | 10 |
| Exampl e 9 | 0.2 | 0.5 | 1:30 | Preparation Example 1 | CMC | Carbodiimide | 45:45:10 | 3 | 4 | 10 | 8 |
| Exampl e 10 | 0.2 | 0.5 | 1:30 | Preparation Example 1 | CMC | Aziridine | 45:45:10 | 4 | 5 | 11 | 13 |
| Compar ative Exampl e 1 | 0.2 | 0.5 | 1:20 | Preparation Example 1 | - | Aziridine | 90:0:10 | 2 | 2 | 43 | 47 |
| Compar ative Exampl e 2 | 0.6 | 1.3 | 1:20 | Preparation Example 1 | - | - | 100:0:0 | 3 | 2 | 52 | 58 |
| Compar ative Exampl e 3 | 0.2 | 0.5 | 1:20 | PVA | - | Aziridine | 90:0:10 | 10 | 15 | 51 | 55 |
| Compar ative Exampl e 4 | 0.2 | 0.5 | 1:30 | Preparation Example 2 | CMC | Aziridine | 45:45:10 | 10 | 15 | 30 | 50 |
| Compar ative Exampl e 5 | 0.2 | 0.5 | 1:30 | Preparation Example 3 | CMC | Aziridine | 45:45:10 | 15 | 20 | 55 | 50 |
| Compar ative Exampl e 6 | 0.2 | 0.5 | 1:30 | Preparation Example 1 | CMC | Epoxy-based | 45:45:10 | 8 | 9 | 31 | 28 |
| Compar ative Exampl e 7 | 0.2 | 0.5 | 1:20 | Preparation Example 1 | PVDF | Aziridine | 45:45:10 | 25 | 30 | 50 | 52 |
| Compar ative Exampl e 8 | 0.2 | 0.5 | 1:20 | Preparation Example 1 | SBR | Aziridine | 45:45:10 | 55 | 50 | 58 | 68 |

Table 2:

| | Filler | | Binder: Filler | Binder | Carboxymethyl cellulose | Cross-linking agent | Binder:CMC: cross-linking agent | Dry shrinkage rate | | Shrinkage rate in electrolyte | |
|---|---|---|---|---|---|---|---|---|---|---|---|
| | D50 | D100 | | | | | | MD | TD | MD | TD |
| Example 11 | 0.2 | 0.5 | 1:30 | Preparation Example 1 | CMC | Aziridine | 45:45:10 | 1 | 1.5 | 3 | 3 |
| Example 12 | 0.2 | 0.5 | 1:25 | Preparation Example 1 | CMC | Aziridine | 45:45:10 | 1.5 | 2 | 7 | 4 |
| Example 13 | 0.2 | 0.5 | 1:20 | Preparation Example 1 | CMC | Aziridine | 45:45:10 | 1.5 | 1.5 | 2 | 3 |
| Example 14 | 0.2 | 0.5 | 1:25 | Preparation Example 1 | CMC | Aziridine | 40:50:10 | 1.5 | 2 | 8 | 8 |
| Example 15 | 0.2 | 0.5 | 1:25 | Preparation Example 1 | CMC | Aziridine | 50:40:10 | 2 | 1.5 | 7 | 8 |
| Example 16 | 0.2 | 0.5 | 1:25 | Preparation Example 1 | CMC | Aziridine | 40:40:20 | 2 | 2 | 6 | 3 |
| Example 17 | 0.3 | 0.8 | 1:20 | Preparation Example 1 | CMC | Aziridine | 45:45:10 | 3 | 2 | 7 | 8 |

As shown in Tables 1 and 2, the separators for a rechargeable lithium battery of the examples may exhibit a significantly low dry shrinkage rate and shrinkage rate in the electrolyte, thereby increasing the stability of the battery.

Accordingly, a separator for a rechargeable lithium battery according to one example embodiment of the current disclosure can exhibit a significantly low dry shrinkage rate and shrinkage rate in an electrolyte, thereby increasing the stability of the battery.

Although example embodiments of the present disclosure have been described above, the present disclosure is not limited thereto and may be modified in any form within the scope of the claims, the detailed description of the present invention, and the accompanying drawings, and it goes without saying that the modifications also fall within the scope of the present invention.

## Claims

1. A separator (30) for a rechargeable lithium battery (100), the separator (30) comprising:

   a porous substrate (1); and
   a coating layer (2) located on at least one surface of the porous substrate (1),
   wherein the coating layer (2) includes a cross-linked product (4) of a binder, a cross-linking agent, and carboxyalkyl cellulose or a salt thereof; and a filler (2),
   the binder includes a (meth)acryl-based binder including a first structural unit derived from (meth)acrylamide, and a second structural unit derived from (meth)acrylamido sulfonic acid or a salt thereof, and
   the cross-linking agent includes one or more of an aziridine-based cross-linking agent and a carbodiimide-based cross-linking agent.

2. The separator of claim 1, wherein the coating layer (2) comprises a composition including the (meth)acryl-based binder, the cross-linking agent, the carboxyalkyl cellulose or salt thereof, and the filler (3).

3. The separator of claim 1 or 2, wherein the carboxyalkyl cellulose or salt thereof comprises carboxymethyl cellulose or a salt thereof.

4. The separator of any one of the preceding claims, wherein the carboxyalkyl cellulose or salt thereof is included in an amount ranging from 20 wt% to 70 wt% of a total of the (meth)acryl-based binder, the cross-linking agent, and the carboxyalkyl cellulose or salt thereof.

5. The separator of any one of the preceding claims, wherein the aziridine-based cross-linking agent comprises one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

6. The separator of any one of the preceding claims, wherein the carbodiimide-based cross-linking agent comprises one or more of a monocarbodiimide-based compound and a polycarbodiimide-based compound.

7. The separator of any one of the preceding claims, wherein the filler has a particle diameter D100 of 1.0 μm or less measured by a laser diffraction method.

8. The separator of any one of the preceding claims, wherein the filler (3) is one of substantially spherical, substantially plate-shaped, substantially cubic, and amorphous.

9. The separator of any one of the preceding claims, wherein the filler (3) is surface-modified to have an amino group on a surface thereof.

10. The separator of any one of the preceding claims, wherein a mass ratio of the (meth)acryl-based binder to the filler (3) is in a range of 1:10 to 1:50.

11. The separator of any one of the preceding claims, wherein, with respect to a total of the (meth)acryl-based binder, the cross-linking agent, and the carboxyalkyl cellulose or salt thereof:

the (meth)acryl-based binder is included in an amount ranging from 30 wt% to 70 wt%,
the cross-linking agent is included in an amount ranging from 5 wt% to 30 wt%, and
the carboxyalkyl cellulose or salt thereof is included in an amount ranging from 20 wt% to 65 wt%.

**12.** The separator of any one of the preceding claims, wherein the first structural unit is represented by Chemical Formula 1 below:

Chemical Formula 1:

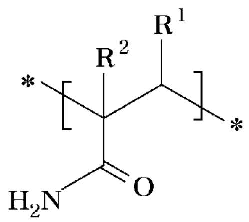

,

in Chemical Formula 1, $R^1$ and $R^2$ each independently comprises hydrogen or a methyl group,
the second structural unit is represented by any one or more of Chemical Formulas 2, 3, and 4:

Chemical Formula 2:

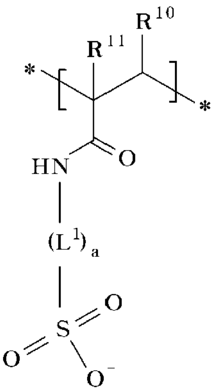

Chemical Formula 3:

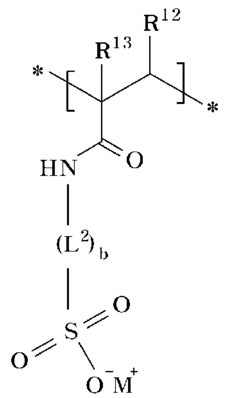

Chemical Formula 4:

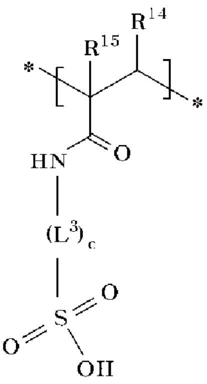

,

in Chemical Formulas 2 to 4,

$R^{10}$, $R^{11}$, $R^{12}$, $R^{13}$, $R^{14}$, and $R^{15}$ each independently comprises hydrogen or a methyl group,
$L^1$, $L^2$, and $L^3$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, and c are each independently an integer ranging from 0 to 2, and
M comprises an alkali metal,
wherein "substitution" indicates that hydrogen is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10, R and R' are each independently hydrogen or a C1 to C6 alkyl group), a carboxybetaine group ($-RR'N+(CH_2)_nCOO-$, n is a natural number from 1 to 10, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R) (R denotes hydrogen, a C1 to C6 alkyl group, a C1 to C6 alkoxy group , or a C6 to C12 aryl group), a carboxyl group (-COOH) or a salt thereof (-C(=O)OM) (M denotes an organic or inorganic cation), a sulfonic acid group ($-SO_3H$) or a salt thereof ($-SO_3M$) (M denotes an organic or inorganic cation), and a phosphate group ($-PO_3H_2$) or a salt thereof ($-PO_3MH$ or $-PO_3M_2$) (M denotes an organic or inorganic cation).

**13.** The separator of any one of the preceding claims, wherein the (meth)acryl-based binder further comprises a third structural unit derived from (meth)acrylic acid or (meth)acrylate.

**14.** The separator of claim 13, wherein the third structural unit is represented by any one or more of Chemical Formulas 5, 6, and 7:

Chemical Formula 5:

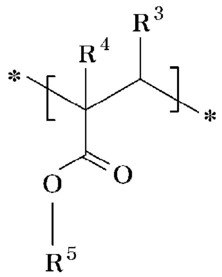

Chemical Formula 6:

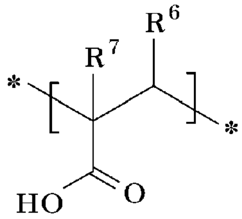

Chemical Formula 7:

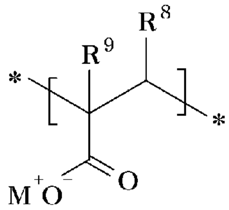

,

in Chemical Formulas 5 to 7,
$R^3$, $R^4$, $R^6$, $R^7$, $R^8$, and $R^9$ each independently comprises hydrogen or a methyl group,
$R^5$ comprises a substituted or unsubstituted C1 to C20 alkyl group, and
M comprises an alkali metal,
wherein "substitution" indicates that hydrogen is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10, R and R' are each independently hydrogen or a C1 to C6 alkyl group), a carboxybetaine group ($-RR'N+(CH_2)_nCOO-$, n is a natural number from 1 to 10, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R) (R denotes hydrogen, a C1 to C6 alkyl group, a C1 to C6 alkoxy group , or a C6 to C12 aryl group), a carboxyl group (-COOH) or a salt thereof (-C(=O)OM) (M denotes an organic or inorganic cation), a sulfonic acid group ($-SO_3H$) or a salt thereof ($-SO_3M$) (M denotes an organic or inorganic cation), and a phosphate group ($-PO_3H_2$) or a salt thereof ($-PO_3MH$ or $-PO_3M_2$) (M denotes an organic or inorganic cation).

**15.** A rechargeable lithium battery (100) comprising:

a positive electrode (10);
a negative electrode (20); and
the separator (30) of any one of the preceding claims between the positive electrode (10) and the negative electrode (20).

FIG. 1

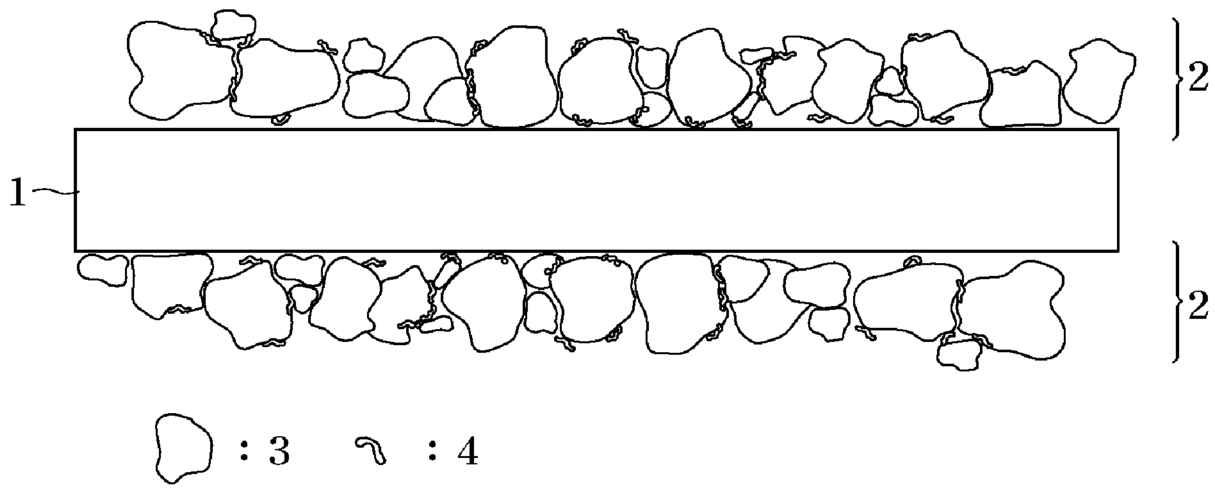

**FIG. 2**

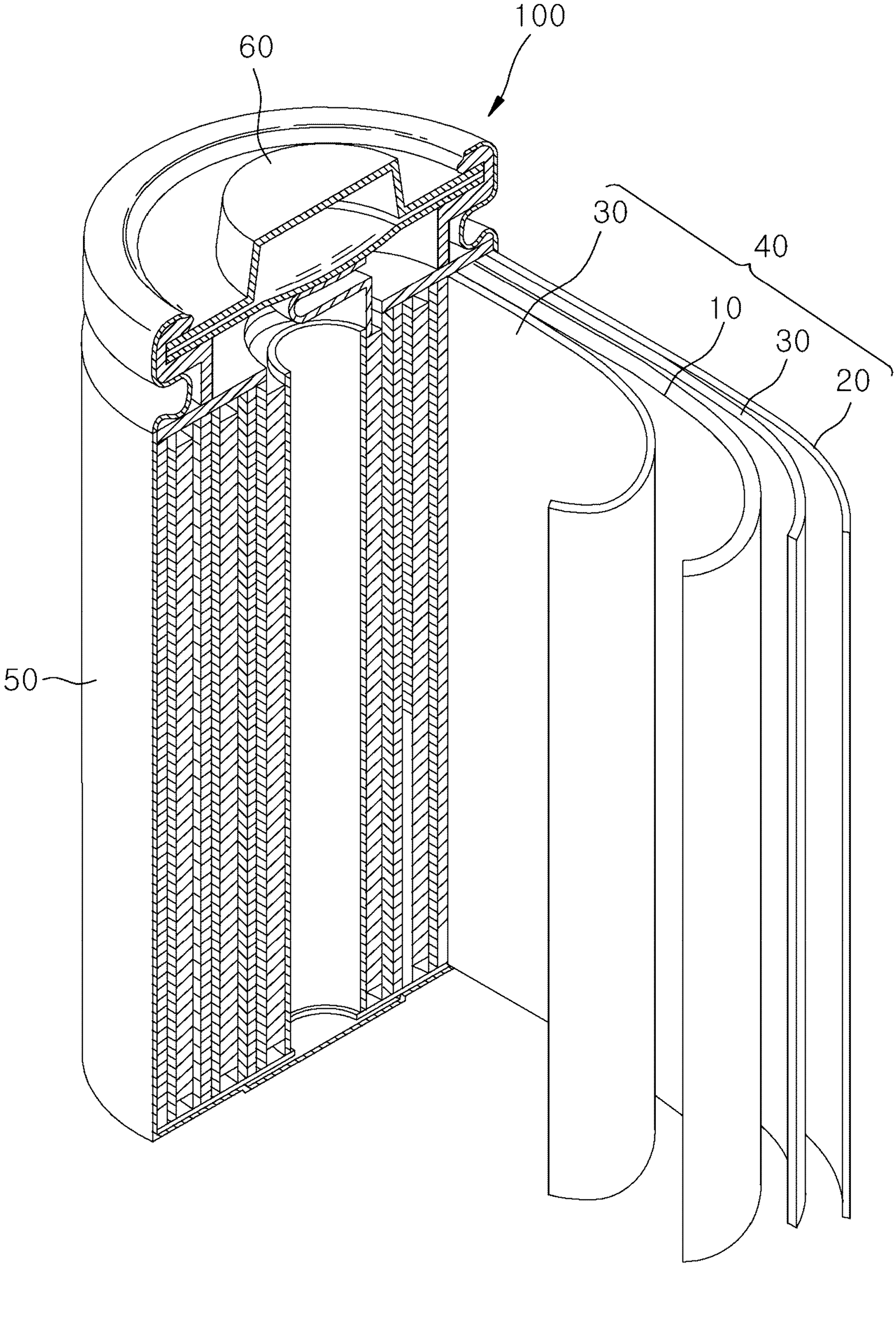

FIG. 3

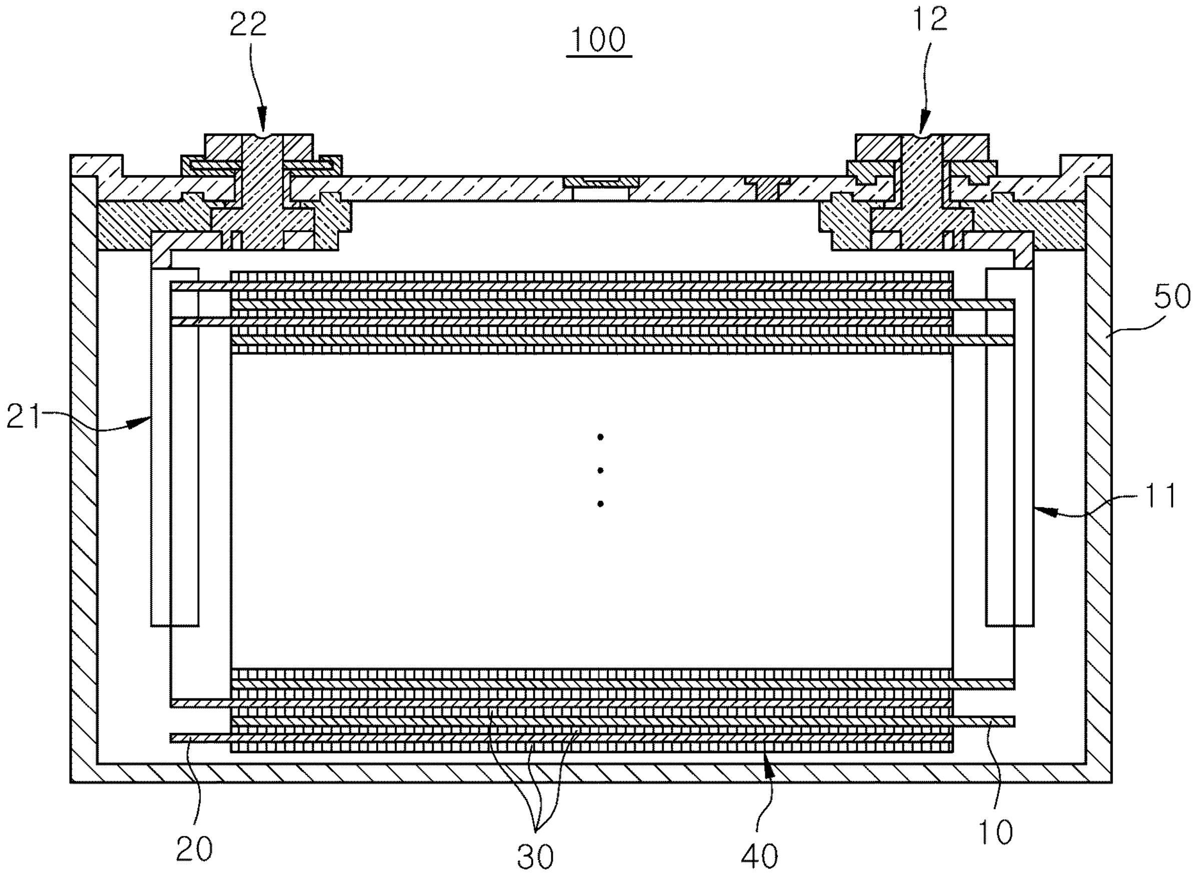

FIG. 4

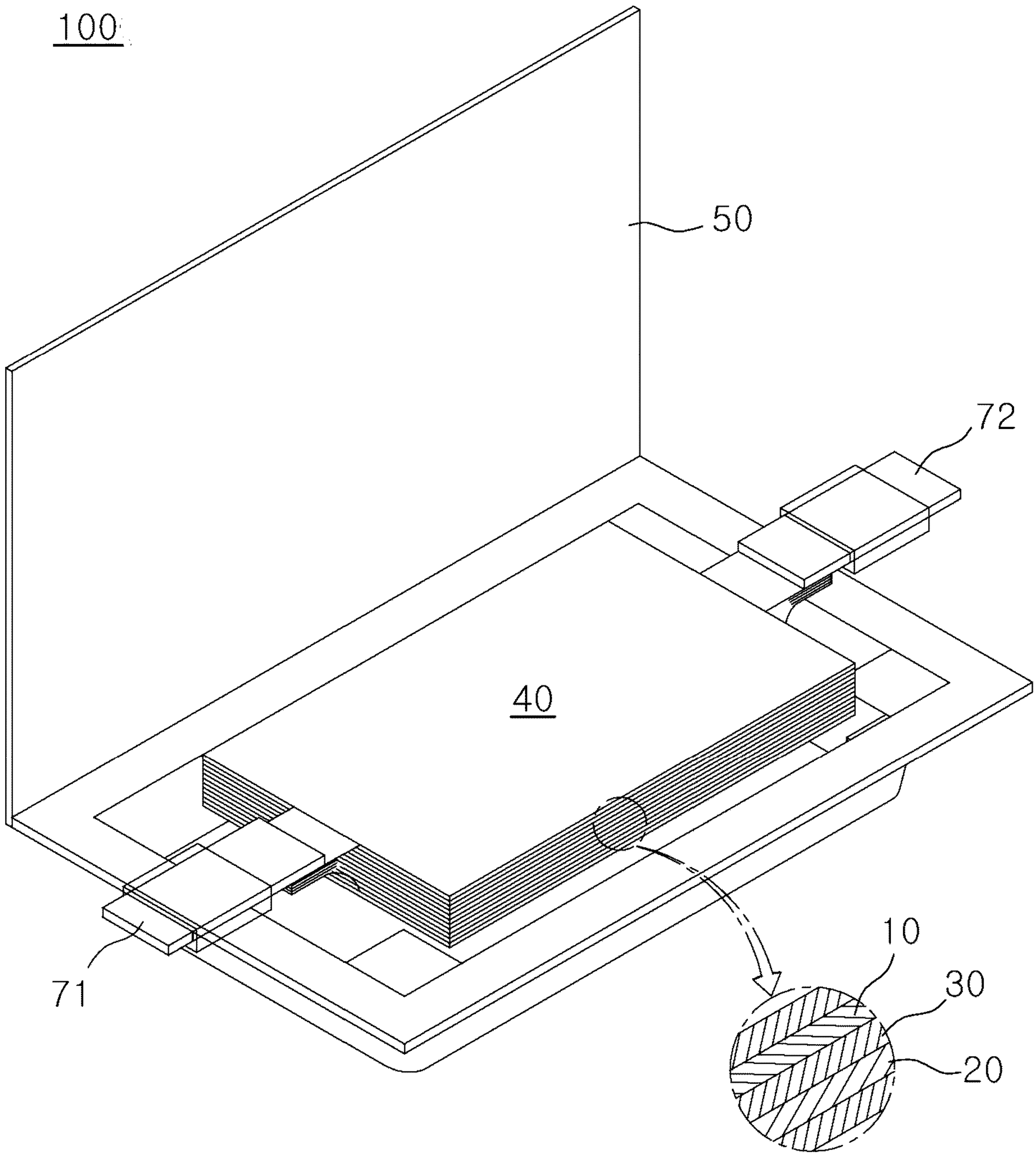

FIG. 5

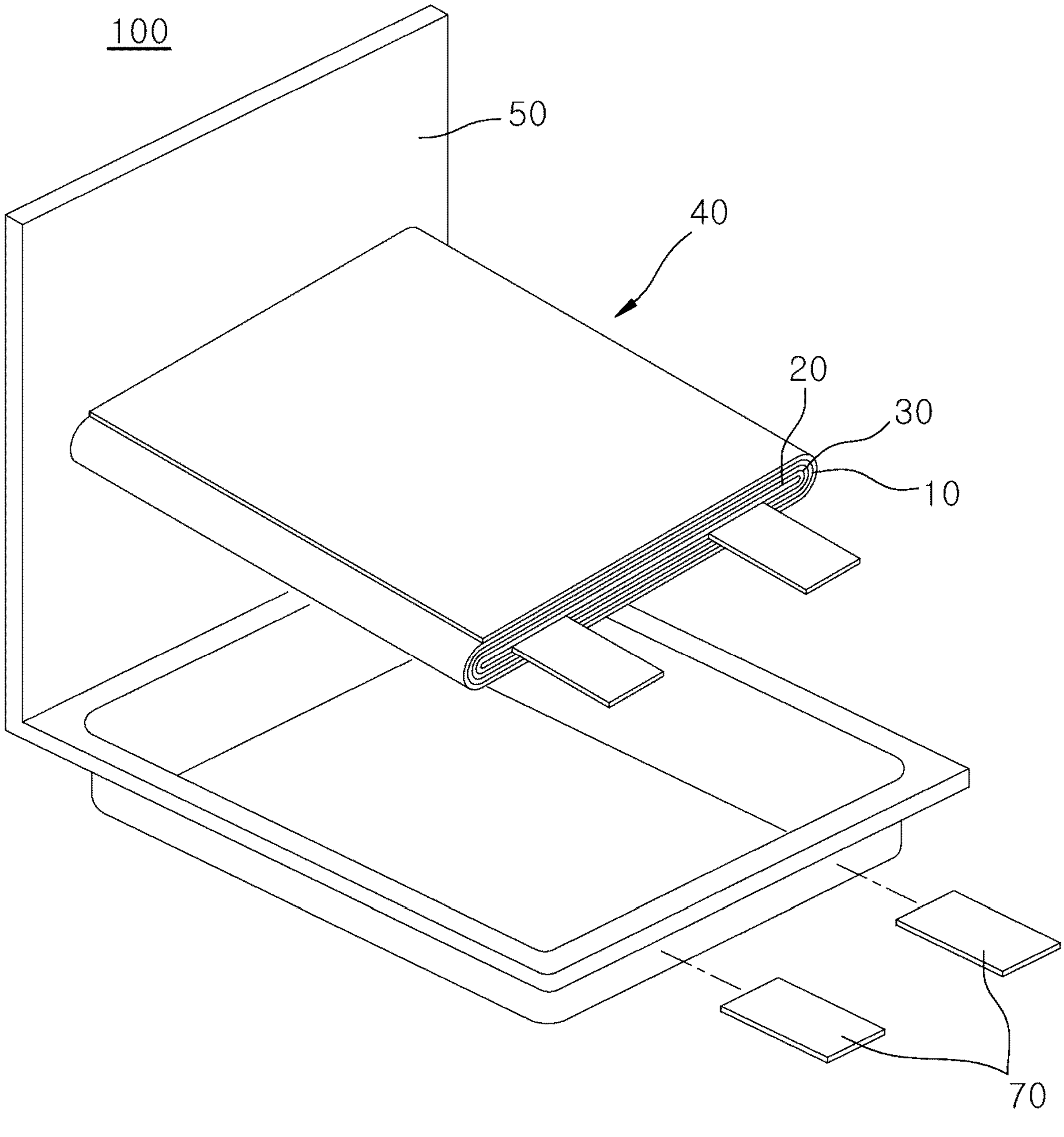

Europäisches Patentamt
European Patent Office
Office européen des brevets

# EUROPEAN SEARCH REPORT

Application Number
EP 25 17 3437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/408638 A1 (CHOI YEONJOO [KR] ET AL) 30 December 2021 (2021-12-30) * paragraphs [0002] - [0004], [0081], [0082], [0086], [0087], [0100] - [0102], [0120] - [0123] * | 1-15 | INV. H01M10/0525 H01M50/403 H01M50/42 H01M50/423 H01M50/434 H01M50/443 H01M50/446 H01M50/489 C08F222/00 C08K3/00 C09D7/00 ADD. H01M4/131 H01M4/133 H01M4/134 |
| Y | JP 2017 134915 A (NIPPON ZEON CO) 3 August 2017 (2017-08-03) * paragraphs [0003], [0010], [0019], [0089] * | 1-15 | |
| | | | TECHNICAL FIELDS SEARCHED (IPC) |
| | | | H01M |

The present search report has been drawn up for all claims

| Place of search | Date of completion of the search | Examiner |
|---|---|---|
| The Hague | 3 September 2025 | Levecque, Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

# ANNEX TO THE EUROPEAN SEARCH REPORT ON EUROPEAN PATENT APPLICATION NO.

EP 25 17 3437

This annex lists the patent family members relating to the patent documents cited in the above-mentioned European search report. The members are as contained in the European Patent Office EDP file on
The European Patent Office is in no way liable for these particulars which are merely given for the purpose of information.

03-09-2025

| Patent document cited in search report | Publication date | Patent family member(s) | Publication date |
|---|---|---|---|
| US 2021408638 A1 | 30-12-2021 | CN 113166518 A | 23-07-2021 |
| | | KR 102084099 B1 | 04-03-2020 |
| | | US 2021408638 A1 | 30-12-2021 |
| | | WO 2020111432 A1 | 04-06-2020 |
| JP 2017134915 A | 03-08-2017 | JP 7088623 B2 | 21-06-2022 |
| | | JP 2017134915 A | 03-08-2017 |

EPO FORM P0459

For more details about this annex : see Official Journal of the European Patent Office, No. 12/82